# EUROPEAN PATENT SPECIFICATION

(11) **EP 2 977 731 B1**
(45) Date of publication and mention of the grant of the patent: **13.09.2023**
(21) Application number: 14770471.2
(22) Date of filing: 21.02.2014
(51) Int. Cl.: G01G 21/00, G01G 21/30, G01G 3/14, G01G 23/00, G01L 1/26, G01G 21/24

(54) **ELASTIC BODY OF WEIGHING SENSOR**
ELASTISCHER KÖRPER EINES WÄGESENSORS
CORPS ÉLASTIQUE DE CAPTEUR DE PESÉE

(30) Priority: 18.03.2013 CN 201310086434; 29.05.2013 CN 201310211407
(43) Date of publication of application: 27.01.2016
(73) Proprietor: Mettler Toledo (Changzhou) Precision Instrument Ltd., Changzhou, Jiangsu 213022 (CN); Mettler Toledo (Changzhou) Measurement Technology Ltd., Jiangsu 213125 (CN); Mettler Toledo (Changzhou) Scale&System Ltd., Changzhou, Jiangsu 213125 (CN)
(72) Inventor: WANG, Wei, Changzhou Jiangsu 213022 (CN); HAO, Degang, Changzhou, Jiangsu 213167 (CN); TANG, Youan, Changzhou Jiangsu 213022 (CN)
(74) Representative: Mettler-Toledo
(86) International application number: PCT/CN2014/072356
(87) International publication number: WO 2014/146529

(56) References cited:
- EP-A2- 0 251 175
- CN-A- 1 746 635
- CN-A- 102 519 568
- CN-A- 103 162 775
- CN-A- 103 256 971
- CN-Y- 200 944 058
- CN-Y- 201 212 834
- US-A- 4 338 825
- US-A- 4 361 199
- US-A- 4 653 599
- US-A- 4 726 435
- US-A- 5 050 693
- US-A- 5 604 336
- US-B1- 8 161 828

## Description

### Technical Field

The invention relates to a weighing cell load cell and it belongs to the technical field of electronic weighing instrument.

### Background Art

In industrial applications, with the continuous improvement of production efficiency, the requirement of weighing is higher and higher. Static weighing cannot meet modern industrial requirements of high speed and high efficiency. It's urgent to address the problem of high precision in dynamic weighing. In dynamic applications, load cells will be more vibration, shock, compression, torsion and so on.

As people's attention to food hygiene, the requirement of dynamic weighing is higher and higher. In dynamic applications, load cells must have high overload capacity. And, easy-to-clean of load cells is very important in food industry. There are two solutions. Firstly, load cells with non-overload protection are used. It's easy to be destroyed in dynamic weighing. Especially in low capacity, sensitive beams are very thin. Secondly, Load cells have external overload protection. Overload protection is enough. But dusts and bacterium is easy to accumulate in the gaps. It will affect the metrology of load cells and food hygiene.

CN 2012 12 834 Y relates to an elastic body of a weighting sensor, which belongs to the technical field of the electronic weighing instrument. The elastic body comprises a fixed part and a strain part, wherein the strain part comprises a strain hole, strain beams and a deformed slotted hole arranged between the two strain beams. In addition, the spacing holes and the deformed slotted hole are intersected, pin shafts are arranged in the spacing holes and are closely matched with the spacing holes of the fixed part, the pin shafts and the spacing holes of the strain part are in clearance fit.

EP 0 251 175 A2 shows a force transducer for devices for measuring compressive, tensile or shearing forces, having a one-piece, parallelipipedic spring element which is subdivided by slots and has a bearing zone, a force initiation zone and a deformation zone and with which a stop operative in the loading direction and the opposite direction respectively is associated.

US 4 653 599 A shows a load cell which includes base and load receiving members connected together by a pair of parallel flexures to form a parallelogram configuration. One of the flexures has at least one strain gage secured thereon, along with a cantilevered stop member positioned between the base and load receiving members. The stop member is suspended between the ends of a pair of adjustable set screws threadably mounted in the base and load receiving members to provide for an overload and underload protection of the load cell. Additional adjustable set screws are strategically placed in the load cell to further provide for the selective adjustment and redistribution of stresses sensed by the strain gage whereby the same electrical signal will be produced independent of the location of a load along a longitudinal axis of the load cell or a second axis perpendicular thereto. Thus, the load cell cannot be overstressed and can be adjusted to provide the same weight readout regardless of the position of the load on a platter secured on the load receiving member.

US 8 161 828 B1 shows a load cell structure for receiving strain gages to monitor applied torsional forces wherein the opposing force-receiving ends have a plurality of sensing beams spaced about an axis of rotation. Limit posts located between the ends each have a discontinuity therein that includes a U-shaped gap to limit relative rotation about the axis and thereby providing overload protection.

### Summary of invention

The present invention is directed to a load cell according to independent claim 1. The load cell structure comprises an internal overload protection mechanism. The structure has good lateral and overload protection. It's easy to be machined and its working life can be increased.

According to the invention, the load cell comprises a fixed part and a strain part. The fixed part comprises a PCB mounting hole and a PCB (Printed Circuit Board). The PCB connects with a cable gland. The strain part comprises a strain hole, stain gages fixed in the strain hole. A seal welded on the load cell seals the strain hole to protect the strain gages. An overload protection mechanism disposed in the strain hole has an overload gap β.

The overload protection mechanism according to the invention comprises an overload beam disposed in the strain hole and the overload beam fractures. The fracture of a further embodiment comprises an angle-shaped projection and an angle-shaped groove and an overload gap β is formed between the angle-shaped projection and the angle-shaped groove.

The angle-shaped projection and the angle-shaped groove are symmetry or asymmetry along the center axis of the overload beam.

The overload protection mechanism comprises an overload beam disposed in the strain hole and the overload beam fractures. The fracture of a further embodiment comprises a polygon projection and a polygon groove and an overload gap β is formed between the polygon projection and the polygon groove.

The overload protection mechanism comprises an overload beam disposed in the strain hole and the overload beam fractures. The fracture of a further embodiment comprises a cylindrical projection and a groove that matches the projection and an overload gap is formed between the cylindrical projection and the groove.

In a further example not being part of the invention the overload beam of the overload protection mechanism is configured as an overload axis fixed in the fixed part or the strain part and a spacing hole formed in the load cell. The free end of the overload axis is located in the spacing hole and an overload gap β is formed between the overload axis and the spacing hole.

The axis of the overload axis and the axis of the load cell is coaxial. Or the axis of the overload axis and the axis of the load cell is offset.

The size of the overload gap β is 0.05 to 1.00 mm.

According to another embodiment, the load cell comprises a fixed part and a strain part. The fixed part comprises a PCB mounting hole. The strain part comprises a strain hole and a pair of stain gages fixed in the strain hole, wherein a cross-shaped overload beam is disposed in the stain hole. The vertical beam of the cross-shaped overload beam comprises an upper notch disposed in the upper part of the vertical beam and a lower notch disposed in the lower part of the vertical beam. The gap δ1 of the upper notch is to balance the overload force of a first strain gage and a second strain gage which are both disposed on both sides of the upper notch, and the gap δ2 of the lower notch is to balance the overload force of a third strain gage and a forth strain gage which are both disposed on both sides of the lower notch. The gap δ1 and the gap δ2 have the same size. The horizontal beam of the cross-shaped overload beam comprising a center notch and the center gap λ of the center notch is for overload protection.

The shape of upper and lower notches are one glyph, zigzag, V-shaped or square waveform.

The shape of notches in the horizontal beam is zigzag, V-shaped or square waveform.

The size of upper and lower gap δ1/δ2 is 0.01 to 0.5 mm and the size of the center gap λ is 0.5~2.0 times of the upper gap δ1.

Two deformation holes are formed on both sides of the strain hole in the up-down direction.

### Brief description of drawings

Combined with drawings, embodiments of the invention will be further described in detail.
- Fig. 1: is an illustrative view of the load cell according to the first embodiment.
- Fig. 2: is an A-A sectional view of Fig. 1.
- Fig. 3: is an A-A sectional view of Fig. 1 with another structure.
- Fig. 4: is an A-A sectional view of Fig. 1 with another structure.
- Fig. 5: is an illustrative view of the load cell according to the second embodiment.
- Fig. 6: is an A-A sectional view of Fig. 5.
- Fig. 7: is an A-A sectional view of Fig. 5 with another structure.
- Fig. 8: is a perspective view of Fig. 5 with another structure.
- Fig. 9: is an exploded view of the load cell according to the third embodiment.
- Fig. 10: is a plan view and sectional view of Fig. 9.

### Description of embodiments

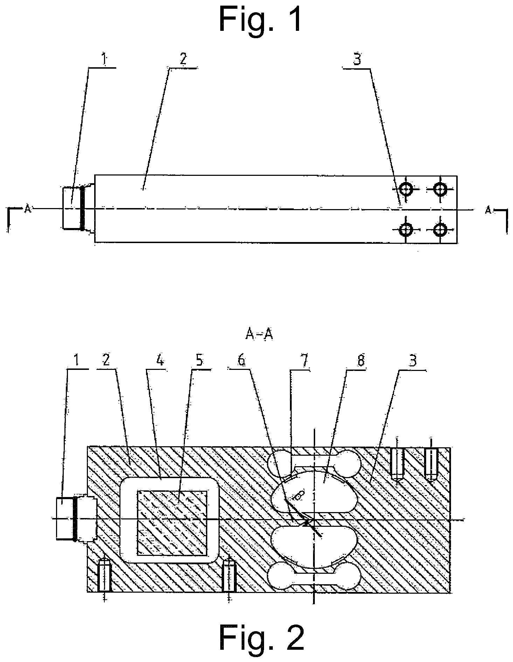

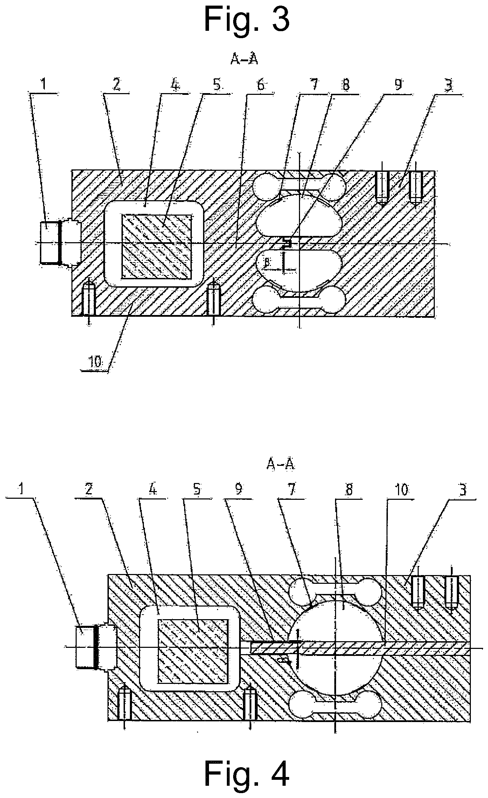

Referring to Figs. 1, 2 and 3, this invention provides a load cell which comprises a fixed part 2 and a strain part 3. The fixed part 2 comprises a mounting hole 4 and a PCB (Printed Circuit Board) 5 installed therein. The PCB 5 connects to a cable gland 1 and electrical signal is outputted by the cable gland 1. The fixed part 2 also includes threaded holes which can fix the load cell to the base by fasteners. The strain part 3 comprises a strain hole 8 and strain gages 7 which locate on the thin walls between the strain hole 8 and the deformation hole. When the load cell deforms by force, the strain gages 7 deform simultaneously and then the resistance value of the strain gages 7 changes. The weighting signal is transformed into a corresponding electrical signal and outputted by circuit. There are also threaded holes formed on the strain part 3 and a bearing part (not shown) is installed by fasteners on the strain part 3. A sealing part is welded on the load cell for sealing the strain hole 8 and the PCB mounting hole. Referring to Figs. 2 and 3, the load cell has an overload protection mechanism disposed in the strain hole 8. The overload protection mechanism has an overload gap β. When the strain part 3 is applied by force, the overload protection mechanism deforms and the overload gap β acts for overload protection.

With reference to Fig. 2, the overload protection mechanism comprises an overload beam 6 which is disposed in the strain hole 8 and fractures. The load cell and the overload beam 6 are one-piece structure. The shape of fracture is an angle-shaped projection and an angle-shaped projection groove that matches the projection. The distance between them is β. The angle-shaped projection and groove is symmetry or asymmetry along the center axis of the overload beam 6. The size of the overload gap β is 0.05 to 1.00 mm, for example, 0.1 mm, 0.25 mm, 0.5 mm or 0.75 mm, etc. The angle-shaped projection and groove matches for having overload protection in the vertical direction, resisting the horizontal force effectively, being protected in multi-directions and having a good anti-torsion property.

With reference to Fig. 3, the overload protection mechanism comprises an overload beam 6 through the strain hole 8 and fractures. The shape of fracture is polygon projection and polygon groove that matches the polygon projection. The distance between them is β. Or the overload protection mechanism comprises an overload beam 6 through the strain hole 8 and fractures. The shape of fracture is cylindrical projection and cylindrical groove that matches the cylindrical projection. The distance between them is β. The distance between them is β. The polygon or cylindrical projection and groove are symmetry or asymmetry along the center axis of the overload beam 6. The distance of the overload gap β as mentioned above is 0.05 to 1.00 mm. The projection and groove matches for having overload protection in the vertical direction.

An example not being part of the invention is shown in Fig. 4. The overload protection mechanism comprises an overload axis 10 installed in the fixed part 2 or the strain part 3 and a spacing hole 9 disposed in the load cell. One end of the axis 10 locates in the spacing hole 9 and the other end is fixed in the fixed part 2 or the strain part 3. Or one end of the axis 10 locates in the spacing hole 9 and the other end is fixed in the strain part 3. The distance between the axis 10 and the hole 9 is an overload gap β. The overload axis 10 and the load cell are coaxial or non-coaxial. The overload axis 10 is equal diameter or stepped from one end to the other end. The size of the overload gap β is 0.05 to 1.00 mm.

The overload protection mechanism is sealed by sealing part in the strain hole 8 so a safe protection in dynamic weighing is obtained. It's suitable for rapid weighing measurement in dynamic situations. Meanwhile, the elastic body is hermetically sealed so that the accumulation of dust which may affect the use of the load cell is avoided and the requirement of food hygiene is obtained.

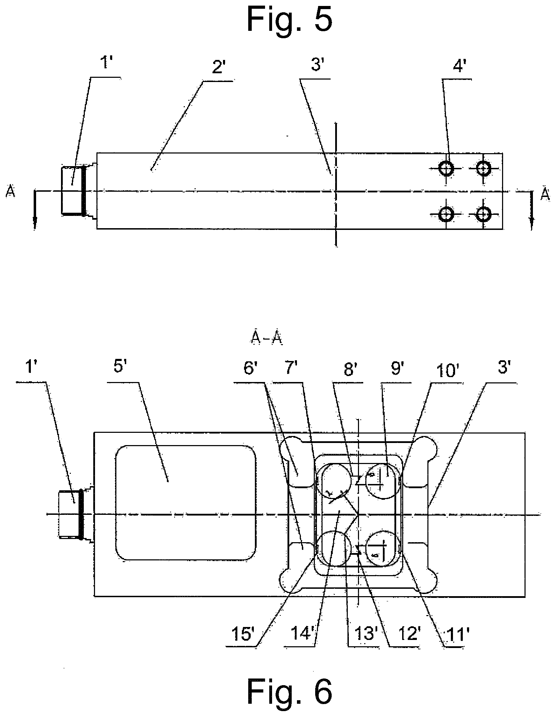

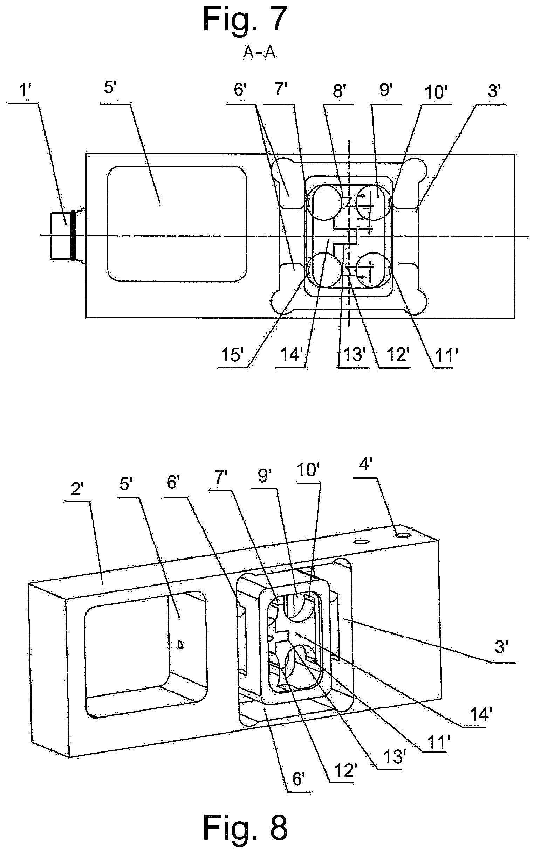

With reference to Figs. 5-8, the load cell comprises a fixed part 2' and a strain part 3'. The fixed part 2' comprises a PCB mounting hole 5' which receives a PCB. The PCB connects with a cable gland 1' and the electrical signal is transmitted by the cable gland 1'. The fixed part 2' also includes threaded holes and the load cell is fixed on the base by fasteners. The strain part 3' comprises a strain hole 9' and several strain gages. There are often four strain gages in the strain hole 9'. The strain gages locate on the thin walls in the strain hole 9'. When load cell deforms by force, the strain gages deform simultaneously and the resistance value of the strain gages changes. The weighting signal is transformed into a corresponding electrical signal and outputted by circuit. There are threaded holes 4' for mounting a bearing plate on the load cell. Seals welded on the load cell seal the strain hole 9' and the PCB mounting hole 5'. As illustrated in Figs. 6 and 7, deformation holes 6 locate on the upper and lower sides of strain hole 9. Sensitive beams locate between deformation holes 6' and strain hole 9' and four strain gages are glued on the sensitive beams.

Reference to Figs. 6 to 8, a cross-shaped overload beam 14' is disposed in the strain hole 9'. The vertical beam of the overload beam 14' has an upper notch 8' disposed in the upper part and a lower notch 12' disposed in the lower part. The upper overload gap δ1 of the upper notch 8' is to balance the overload force of the first strain gages 7' and the second strain gages 10'. And the lower overload gap δ2 of the lower notch 12' is to balance the overload force of the third strain gages 11' and the forth strain gages 15'. The upper overload gap δ1 and the lower overload gap δ2 have the same size. The shape of the upper notch 8'and the lower notch 12' is one glyph, zigzag, V-shaped or square waveform so that the load cell has a good anti-torsion performance. The center line of the upper notch 8' and the center line between the first strain gages 7' and the second strain gage 10' is close or overlapping. Similarly, the center line of upper notch 12' and the center line between the third strain gages 11' and the forth strain gages 15' is closed or overlapping. The upper and the lower notch can balance the bearing force of the four strain gages when overloading so it can reduce the damage of the strain gages. As seen in Figs. 6 and 7, a center notch 13' is included in the horizontal beam 14' and a center gap λ is used for overload protection. As seen in Fig. 6, the shape of the center notch 13' is V-shaped, or with reference to Fig. 7, the shape of the center notch 13' is square waveform. The shape of the center notch 13' also can be zigzag. The bottom of the V-shaped notch and the center axis of horizontal beam is overlapping while the center line of zigzag, or square waveform notches and the center line of the horizontal beam is close or overlapping.

With reference to Figs. 6-8, the size of the upper and the lower gap δ1, δ2 is 0.01 to 0.5 mm. For example, the δ1 or δ2 may be 0.1 mm, 0.25 mm or 0.5 mm. The size of center gap λ is 0.5~2.0 times of the upper gap δ1, for example, the center gap λ is 0.05 mm, 0.125 mm, 0.25 mm, 0.5 mm or 1 mm, etc. By controlling the size of the overload gap δ1, δ2 and λ, the three gaps can have overload protection simultaneously.

When the force is transferred to the strain part 3', the strain gages deform and an electrical signal is generated and outputted. The upper and lower notches 8', 12' deform for balancing the output of the four strain gages when overload occurs. As the increase of the force, the overload gap of the upper notch 8' and the lower notch 12' becomes smaller gradually or closed and the center gap λ becomes smaller gradually. When the weighing range is exceeded, the upper, lower and center gap are closed and an overload protection is obtained.

A cross-shaped overload beam 14' is disposed in the stain hole 9' and the overload gaps locate on the overload beam 14'. Seals which seal the strain hole 9' are to put the overload gaps in the load cell and sealed completely so that an internal protective structure is formed. The internal overload protection can be fit for the rapid weighing in the dynamic weighing and can have a safe protection. As the gaps are sealed in the strain hole 9', dusts cannot affect the performance of the load cell. The scales are easy-to-clean to meet the requirement of the food hygiene. The invention shows a structure with an internal cross-shaped beam 14'. The upper and lower notches can balance the outputs of four strain gages. It can reduce the failure of one or two gages when the failure is caused by overload. The upper, lower and center gap can act as overload protection. Load cell have a strong overload protection and lateral load capacity. It can increase the lifetime of the load cell and have high a natural frequency. It can control the overload capacity by adjust the gaps so that the manufacture of the load cell and the control of the overload capacity are easy.

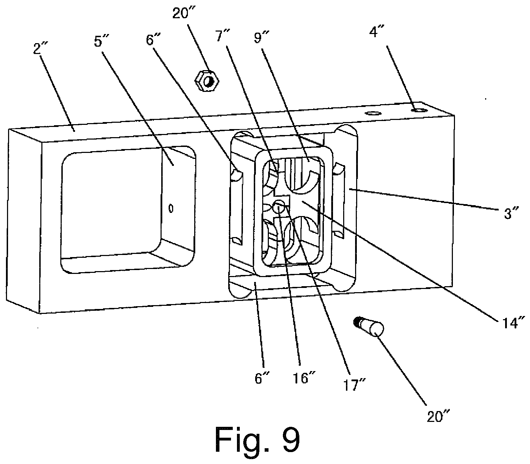

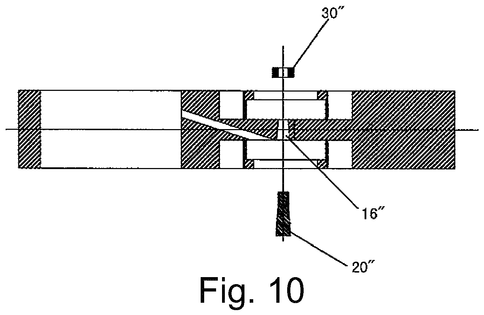

Figs.9 and 10 illustrate a third embodiment or the invention. The difference between Figs.9-10 and Figs.5-8 is that it has a tapered hole 16" that locates on the center of the overload beam 14". The tapered hole 16" and the center notch 13" are connected by a narrow slit 17". In one embodiment, the tapered pin 20" and the tapered hole 16" have the same taper. The diameter of the big end of the tapered pin 20" is larger than the corresponding end of the tapered hole 16". The length of tapered 20" is larger than the depth of the tapered hole 16. There has thread at the small end of tapered pin 20". The threaded end of the tapered pin 20" passes the tapered hole 16" from the big end of the tapered hole 16" to the small end. The screw 30" is assembled on the tapered pin 20". With continuous tightening of the screw 30", the tapered pin 20" will deep in the tapered hole 16". Because the diameter of big end of tapered pin 20" is larger than the corresponding end of the tapered hole 16", pressure appears on the surface of the tapered pin 16". Because of the narrow slit 17", the diameter of the tapered hole 16" will increase with the pressure. The diameter of the tapered hole 16" gradually increase so that this leads to decrease the size of the overload gap. In another embodiment, the diameter of the big end of the tapered pin 20" is bigger that the corresponding end of the tapered hole 16". The length of the tapered pin 20" is longer than that of the tapered hole 16". There has thread at the small end of tapered pin 20". Maybe the tapered pin 20" and the tapered hole 16" have different taper. It also can adjust the overload gap by tightening and loosening the screw 30" as long as when the tapered pin 20" goes through the tapered hole", the thread in the small end of the tapered pin 20" can connect.

### Reference signs list

- 1, 1': cable gland
- 2, 2': fixed part
- 3, 3': strain part
- 4, 5': PCB mounting hole
- 4': threaded hole
- 5, 5': PCB
- 6, 14': overload beam
- 6': deformation hole
- 7: strain gages
- 7': 1st strain gage
- 8, 9': strain hole
- 8': upper notch
- 9: spacing hole
- 10: overload axis
- 10': 2nd strain gage
- 11': 3rd strain gage
- 12': lower notch
- 13': center gap
- 15': 4th strain gage
- 16": tapered hole
- 17": narrow slit
- 18": tapered hole
- 20": tapered pin
- 30": screw

## Claims

1. A load cell, comprising
a fixed part (2), including
a PCB mounting hole (4) and
a PCB (5) disposed in the PCB mounting hole (4), the PCB (5) connecting with a cable gland (1);
a strain part (3), including
a strain hole (8) disposed in the load cell, and
strain gages (7) disposed in the strain hole (8), the load cell further comprising
an overload protection mechanism which has an overload gap (β)
**characterized in that** the overload protection mechanism comprises an overload beam (6) that passes through the strain hole (8) and a fracture disposed in the overload beam (6), the fracture having a projection and a groove that matches the projection, the distance between the projection and the groove being an overload gap (β), and **in that** a sealing part is welded on the load cell to seal the PCB mounting hole (4) and the strain hole (8) and thereby the overload protection mechanism that passes through the strain hole (8).

2. The load cell of claim 1, **characterized in that** the fracture having an angle-shaped projection and an angle-shaped groove that matches the projection.

3. The load cell of claim 2, **characterized in that** the angle-shaped projection and the angle-shaped groove are symmetry or asymmetry along the center of the overload beam (6).

4. The load cell of claim 1, **characterized in that** the fracture having a polygon projection and a polygon groove that matches the polygon projection.

5. The load cell of claim 1, **characterized in that** the fracture having a cylindrical projection and a cylindrical groove that matches the cylindrical projection.

6. The load cell of claim 1, **characterized in that** the overload beam of the overload protection mechanism is configured as a cross-shaped overload beam (14') disposed in the stain hole (9'), an upper notch (8') being disposed in the upper part of the vertical beam of the overload beam (14') and a lower notch (12') being disposed in the lower part of the vertical beam of the overload beam (14'), the upper overload gap (δ1) of the upper notch (8') being to balance the overload force of the first strain gage (7') and the second strain gage (10'), the lower overload gap (δ2) of the lower notch (12') being to balance the overload force of the third strain gage (11') and the forth strain gage (15'), the upper overload gap (δ1) and the lower overload gap (δ2) having the same size, the horizontal beam of the overload beam (14') having a center notch (13'), the center gap (λ) of the center notch (13') being used for overload protection.

7. The load cell of claim 6, **characterized in that** the shape of the upper and lower notches (8', 12') is one glyph, zigzag, V-shaped or square waveform..

8. The load cell of claim 6, **characterized in that** the shape of the center notch (13') of the overload beam (14') is zigzag, V-shaped or square waveform.

9. The load cell of claim 6, **characterized in that** the size of the upper gap (δ1) and the lower gap (δ2) is 0.01 to 0.5 mm and the size of the center gap (λ) is 0.5~2.0 times of the upper gap (δ1).

10. The load cell of claim 6, **characterized in that** deformation holes (6') are located on the upper and lower sides of the strain hole (6').

11. The load cell of claim 6, **characterized in that** a tapered hole (16") is disposed in the center of the overload beam (14"), the tapered hole (16") and the center notch (13") connecting together by a slit (17").

## Patentansprüche

1. Wägezelle, umfassend
ein festes Teil (2), beinhaltend
ein PCB-Montageloch (4) und
eine PCB (5), die in dem PCB-Montageloch (4) angeordnet ist, wobei die PCB (5) mit einer Kabeldurchführung (1) verbunden ist;
ein Dehnungsteil (3), beinhaltend
ein Dehnungsloch (8), das in der Wägezelle angeordnet ist, und Dehnungsmessstreifen (7), die in dem Dehnungsloch (8) angeordnet sind, wobei die Wägezelle ferner Folgendes umfasst:
einen Überlastschutzmechanismus, der einen Überlastspalt (β) aufweist,
**dadurch gekennzeichnet, dass**
der Überlastschutzmechanismus einen das Dehnungsloch (8) durchdringenden Überlastbalken (6) und einen im Überlastbalken (6) angeordneten Bruch umfasst, wobei der Bruch einen Vorsprung und eine zum Vorsprung passende Nut aufweist, wobei der Abstand zwischen dem Vorsprung und der Nut ein Überlastspalt (β) ist, und dass ein Dichtungsteil auf die Wägezelle geschweißt ist, um das PCB-Montageloch (4) und das Dehnungsloch (8) und dadurch den das Dehnungsloch (8) durchdringenden Überlastschutzmechanismus abzudichten.

2. Wägezelle nach Anspruch 1, **dadurch gekennzeichnet, dass** der Bruch einen winkelförmigen Vorsprung und eine zum Vorsprung passende winkelförmige Nut aufweist.

3. Wägezelle nach Anspruch 2, **dadurch gekennzeichnet, dass** der winkelförmige Vorsprung und die winkelförmige Nut symmetrisch oder asymmetrisch entlang der Mitte des Überlastbalkens (6) verlaufen.

4. Wägezelle nach Anspruch 1, **dadurch gekennzeichnet, dass** der Bruch einen Polygonvorsprung und eine zum Polygonvorsprung passende Polygonnut aufweist.

5. Wägezelle nach Anspruch 1, **dadurch gekennzeichnet, dass** der Bruch einen zylindrischen Vorsprung und eine zum zylindrischen Vorsprung passende zylindrische Nut aufweist.

6. Wägezelle nach Anspruch 1, **dadurch gekennzeichnet, dass** der Überlastbalken des Überlastschutzmechanismus als ein kreuzförmiger Überlastbalken (14') ausgebildet ist, der in dem Dehnungsloch (9') angeordnet ist, wobei eine obere Kerbe (8') im oberen Teil des vertikalen Balkens des Überlastbalkens (14') angeordnet ist und eine untere Kerbe (12') im unteren Teil des vertikalen Balkens des Überlastbalkens (14') angeordnet ist, wobei der obere Überlastspalt (δ1) der oberen Kerbe (8') zum Ausgleich der Überlastkraft des ersten Dehnungsmessstreifens (7') und des zweiten Dehnungsmessstreifens (10') dient, wobei der untere Überlastspalt (δ2) der unteren Kerbe (12') zum Ausgleich der Überlastkraft des dritten Dehnungsmessstreifens (11') und des vierten Dehnungsmessstreifens (15') dient, wobei der obere Überlastspalt (δ1) und der untere Überlastspalt (δ2) gleich groß sind, wobei der horizontale Balken des Überlastbalkens (14') eine Mittelkerbe (13') aufweist, wobei der Mittelspalt (λ) der Mittelkerbe (13') für den Überlastschutz verwendet wird.

7. Wägezelle nach Anspruch 6, **dadurch gekennzeichnet, dass** die Form der oberen und unteren Kerbe (8', 12') eine Glyphen-, Zickzack-, V- oder Rechteckwellenform ist.

8. Wägezelle nach Anspruch 6, **dadurch gekennzeichnet, dass** die Form der Mittelkerbe (13') des Überlastbalkens (14') eine Zickzack-, V- oder Rechteckwellenform ist.

9. Wägezelle nach Anspruch 6, **dadurch gekennzeichnet, dass** die Größe des oberen Spalts (δ1) und des unteren Spalts (δ2) 0,01 bis 0,5 mm beträgt und die Größe des mittleren Spalts (λ) das 0,5- bis 2,0-Fache des oberen Spalts (δ1) beträgt.

10. Wägezelle nach Anspruch 6, **dadurch gekennzeichnet, dass** sich Verformungslöcher (6') auf der oberen und unteren Seite des Dehnungslochs (6') befinden.

11. Wägezelle nach Anspruch 6, **dadurch gekennzeichnet, dass** ein sich verjüngendes Loch (16") in der Mitte des Überlastbalkens (14") angeordnet ist, wobei das sich verjüngende Loch (16") und die Mittelkerbe (13") durch einen Schlitz (17") miteinander verbunden sind.

## Revendications

1. Cellule de charge, comprenant
une partie fixe (2), incluant
un trou de montage de PCB (4) et
une PCB (5) disposée dans le trou de montage de PCB (4), la PCB (5) se connectant à un presse-étoupe (1) ;
une partie de contrainte (3), incluant
un trou de contrainte (8) disposé dans la cellule de charge, et
des jauges de contrainte (7) disposées dans le trou de contrainte (8), la cellule de charge comprenant en outre
un mécanisme de protection contre les surcharges qui présente un intervalle de surcharge (β)
**caractérisée en ce que**
le mécanisme de protection contre les surcharges comprend une poutre de surcharge (6) qui passe à travers le trou de contrainte (8) et une fracture disposée dans la poutre de surcharge (6), la fracture ayant une saillie et une rainure qui correspond à la saillie, la distance entre la saillie et la rainure étant un espace de surcharge (β), et **en ce qu'**une pièce d'étanchéité est soudée sur la cellule de charge pour sceller le trou de montage de PCB (4) et le trou de contrainte (8) et ainsi le mécanisme de protection contre les surcharges qui traverse le trou de contrainte (8).

2. Cellule de charge selon la revendication 1, **caractérisée en ce que** la fracture présente une saillie en forme d'angle et une rainure en forme d'angle qui épouse la saillie.

3. Cellule de charge selon la revendication 2, **caractérisée en ce que** la saillie en forme d'angle et la rainure en forme d'angle sont symétriques ou dissymétriques le long du centre de la poutre de surcharge (6).

4. Cellule de charge selon la revendication 1, **caractérisée en ce que** la fracture a une saillie polygonale et une rainure polygonale qui correspond à la saillie polygonale.

5. Cellule de charge selon la revendication 1, **caractérisée en ce que** la fracture présente une saillie cylindrique et une rainure cylindrique qui épouse la saillie cylindrique.

6. Cellule de charge selon la revendication 1, **caractérisée en ce que** la poutre de surcharge du mécanisme de protection contre les surcharges est configurée comme une poutre de surcharge en forme de croix (14') disposée dans le trou de contrainte (9'), une encoche supérieure (8') étant disposée dans la partie supérieure de la poutre verticale de la poutre de surcharge (14') et une encoche inférieure (12') étant disposée dans la partie inférieure de la poutre verticale de la poutre de surcharge (14'), l'espace de surcharge supérieur (δ1) de l'encoche supérieure (8') étant destiné à équilibrer la force de surcharge de la première jauge de contrainte (7') et de la deuxième jauge de contrainte (10'), l'espace de surcharge inférieur (δ2) de l'encoche inférieure (12') étant destiné à équilibrer la force de surcharge de la troisième jauge de contrainte (11') et de la quatrième jauge de contrainte (15'), l'espace de surcharge supérieur (δ1) et l'espace de surcharge inférieur (δ2) ayant la même taille, la poutre horizontale de la poutre de surcharge (14') ayant une encoche centrale (13'), l'espace central (λ) de l'encoche centrale (13') étant utilisé pour la protection contre les surcharges.

7. Cellule de charge selon la revendication 6, **caractérisée en ce que** la forme des encoches supérieure et inférieure (8', 12') est une forme d'onde en glyphe, en zigzag, en V ou carrée.

8. Cellule de charge selon la revendication 6, **caractérisée en ce que** la forme de l'encoche centrale (13') de la poutre de surcharge (14') est une forme en zigzag, en V ou carrée.

9. Cellule de charge selon la revendication 6, **caractérisée en ce que** la taille de l'espace supérieur (δ1) et de l'espace inférieur (δ2) est de 0,01 à environ 0,5 mm et la taille de l'espace central (λ) est de 0,5 à 2,0 fois de l'espace supérieur (δ1).

10. Cellule de charge selon la revendication 6, **caractérisée en ce que** des trous de déformation (6') sont situés sur les côtés supérieur et inférieur du trou de contrainte (6').

11. Cellule de charge selon la revendication 6, **caractérisée en ce qu'**un trou conique (16") est disposé au centre de la poutre de surcharge (14"), le trou conique (16") et l'encoche centrale (13") étant reliés ensemble par une fente (17").
